Europäisches Patentamt

European Patent Office

Office européen des brevets

(19)

(11) Veröffentlichungsnummer: **0 080 191**
**A1**

# (12) EUROPÄISCHE PATENTANMELDUNG

(21) Anmeldenummer: 82110721.6

(22) Anmeldetag: 19.11.82

(51) Int. Cl.³: **G 03 B 21/58**, B 65 H 75/28, E 06 B 9/172

(30) Priorität: 20.11.81 DE 3146073
20.08.82 DE 3231091

(43) Veröffentlichungstag der Anmeldung: 01.06.83
Patentblatt 83/22

(84) Benannte Vertragsstaaten: BE DE FR GB IT NL SE

(71) Anmelder: Meinunger, Helmut, Ehrenfelsstrasse 3,
D-8000 München 70 (DE)

(72) Erfinder: Meinunger, Helmut, Ehrenfelsstrasse 3,
D-8000 München 70 (DE)

(74) Vertreter: Schaefer, Gerhard, Dr., Seitnerstrasse 13,
D-8023 Pullach (DE)

(54) **Vorrichtung zum Aufwickeln einer Projektionsleinwand.**

(57) Bei einer Vorrichtung zum Aufwickeln einer Projektionsleinwand auf eine in einem Gehäuse gelagerte rohrförmige Rolle (1), an der eine Kante der Leinwand (6) befestigt ist, weist die Rolle eine längs einer Mantellinie verlaufende Ausnehmung auf, in die ein der Außenkontur der Rolle (1) angepaßtes Befestigungsteil (4) für die Leinwand (6) verrastbar eingesetzt ist.

## Vorrichtung zum Aufwickeln einer Projektionsleinwand

Die Erfindung betrifft eine Vorrichtung zum Aufwickeln einer Projektionsleinwand auf eine in einem Gehäuse gelagerte rohrförmige Rolle, an der eine Kante der Leinwand befestigt ist.

Bekannte Vorrichtungen dieser Art haben den Nachteil, daß beim Aufwickeln der Leinwand jeweils beim Übergang einer Lage in die nächste eine der Dicke der Leinwand entsprechende Stufe entsteht, die in den ersten Lagen der Leinwand deutliche Einprägungen hinterläßt. Beim Ausrollen der Leinwand machen sich diese Einprägungen störend im projizierten Bild bemerkbar. Aus diesem Grunde wurden bei bekannten ausrollbaren Leinwänden zunächst mehrere Lagen der Leinwand auf die Rolle aufgewickelt, die beim Ausziehen der Leinwand nicht ausrollbar sind. Die ausgezogene Leinwand zeigt dann keine Einprägungen mehr. Es ist jedoch erforderlich, hierbei mehr Leinwandfläche vorzusehen, als optisch genutzt wird. Die verwendeten, speziell beschichteten Leinwände sind jedoch teuer.

Aufgabe der Erfindung ist es, eine Vorrichtung zum Aufwickeln einer Leinwand zu schaffen, bei der die aufgewickelte Leinwand optisch voll genutzt werden kann und bei der beim Ausziehen trotzdem keine störenden Einprägungen vorhanden sind. Dies wird dadurch erreicht, daß die Rolle eine längs einer Mantellinie verlaufende Ausnehmung aufweist, in die ein der Außenkontur der Rolle angepaßtes Befestigungsteil für die Leinwand verrastbar eingesetzt ist.

Durch die erfindungsgemäße Vorrichtung wird die Entstehung von Einprägungen in die Leinwand bereits bei der ersten Lage vermieden. Gemäß einer Ausbildung der Erfindung läßt sich dies in der Weise erreichen, daß die die Ausnehmung begrenzenden Kanten der Rolle radial nach innen versetzt sind und das Befestigungsteil so ausgebildet ist, daß sein Außenradius mit dem der Rolle übereinstimmt.

Gemäß einer vorteilhaften Weiterbildung der Erfindung weist das Befestigungsteil rinnenförmige, in Längsrichtung sich erstreckende Ausnehmungen auf, in welche die die Ausnehmung begrenzenden Kanten der Rolle verrastbar eingreifen. Hierbei sind die Kanten vorzugsweise abgerundet. Ihr Krümmungsradius ist mindestens auf der Seite, auf der die Leinwand eingeklemmt wird, an den Krümmungsradius der Ausnehmungen angepaßt.

Das Befestigungsteil ist bei dieser Ausführungsform vorteilhafterweise im Querschnitt pilzförmig ausgebildet, wobei sich an die kappenförmige Abdeckung ein Fußteil anschließt, dessen ins Innere der Rolle ragendes Fußteil keilförmige Abschrägungen aufweist. Diese erleichtern die Einsetzung des Befestigungsteils. Das Einsetzen dieses Befestigungsteils kann dadurch noch weiter erleichtert werden, daß dieses in der Mitte mit einer Längsnut versehen ist. Hierdurch wird das Fußteil elastisch leichter verformbar. Außerdem wird seine Herstellung beispielsweise durch ein Stranpreßverfahren vereinfacht.

Bei einer besonders vorteilhaften weiteren Ausführungsform der Erfindung ist die Ausnehmung nutenförmig ausgebildet

Form. 5729 7.78

und in ihrem Querschnitt zum Innern der Rolle hin erweitert. Das in diese Ausnehmung eingesetzte Befestigungsteil weist an der Außenseite im Querschnitt die Form eines Kreisabschnittes mit dem Radius der Rolle auf und ist an beiden Kanten nach innen sich erweiternd abgeschrägt.

Gemäß einer Weiterbildung der Erfindung weist das Befestigungsteil an der einen inneren Längskante eine kreisbogenförmige Abrundung auf, deren innere Kante um die Dicke der Leinwand über die Innenkante des Befestigungsteils vorsteht, wobei die Höhe des Befestigungsteils an dieser Kante gleich der Höhe der anderen Kante ist. Durch diese Ausbildungsform ist es einerseits möglich, die Leinwand durch einfaches Eindrücken des Befestigungsteils in die Ausnehmung zu befestigen und andererseits an den beiden Kanten des Befestigungsteils einen Höhenausgleich für die aufgewickelte Leinwand zu schaffen.

Gemäß einer besonders vorteilhaften Weiterbildung der Erfindung ist die Außenkontur der Rolle aus zwei ineinander übergehenden Halbkreishälften mit gleichem Radius aufgebaut, von denen der Mittelpunkt derjenigen Hälfte, in der die Ausnehmung angeordnet ist, um die Dicke der Leinwand senkrecht zur Mitte der Ausnehmung in Richtung der anderen Hälfte versetzt ist.

Weitere Einzelheiten und Vorteile der Erfindung können den in der Zeichnung dargestellten Ausführungsbeispielen entnommen werden. Es zeigen:

Fig. 1      einen Querschnitt durch eine Ausführungsform der erfindungsgemäßen Vorrichtung;

Fig. 2      einen Teilschnitt durch den oberen Teil der in Fig. 1 dargestellten Rolle vor dem Einsetzen des Befestigungsteils;

Fig. 3       eine weitere Ausführungsform der erfindungsgemäßen Vorrichtung;

Fig. 4       einen Teilschnitt durch den oberen Teil der in

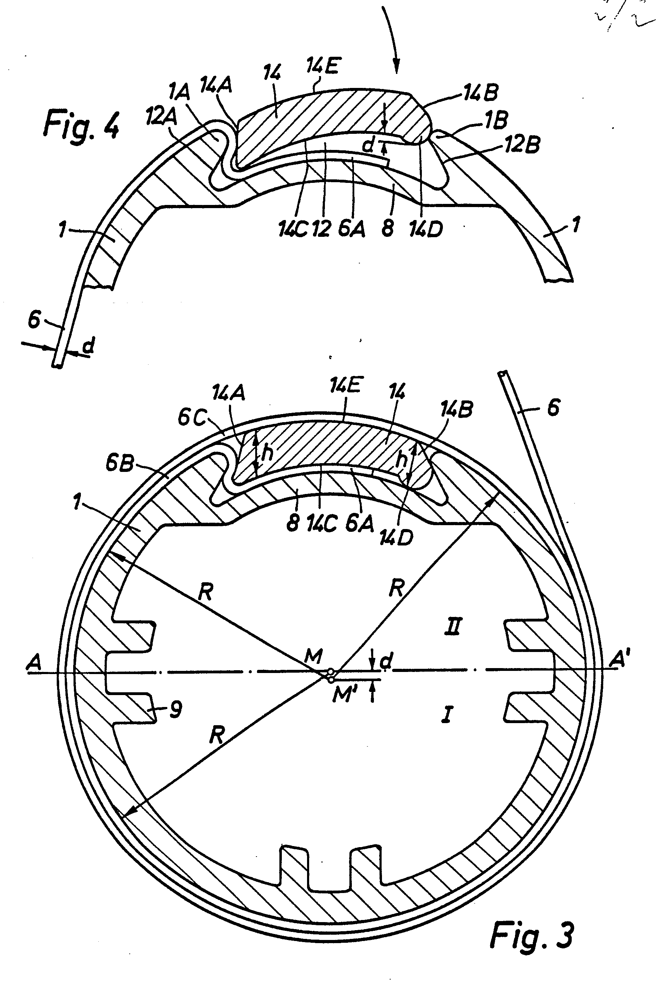

            Fig. 3 dargestellten Rolle vor dem Einsetzen
            des Befestigungsteils.

Die erfindungsgemäße Vorrichtung zum Aufwickeln einer Projektionsleinwand besteht in bekannter Weise aus einem (nicht)
dargestellten) Gehäuse, in dem eine Rolle gelagert ist, an
der eine Kante einer Leinwand befestigt ist. In der Zeichnung ist nur die aus Metall oder Kunststoff bestehende Rolle
1 dargestellt.

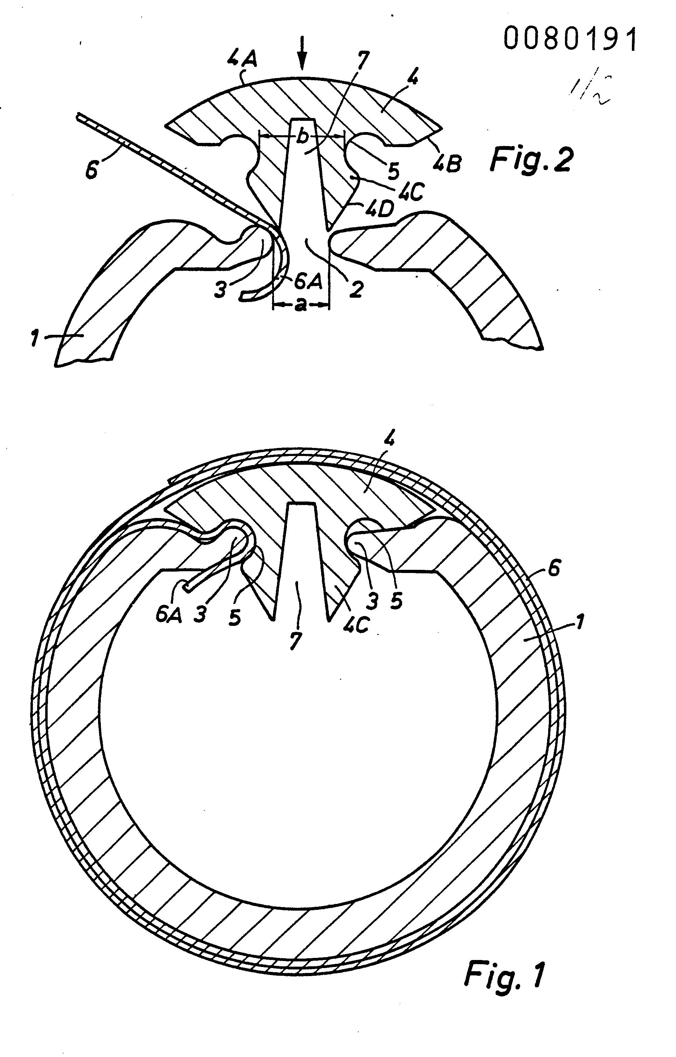

Bei der in den Figuren 1 und 2 dargestellten Ausführungsform ist die Rolle 1 mit einer axial verlaufenden, bis in
ihren Innenraum durchgehenden Ausnehmung 2 versehen. Die
an die Ausnehmung 2 angrenzenden Randteile 3 der Rolle 1
sind nach innen zurückversetzt. Ihre Kanten sind in der
dargestellten Weise abgerundet.

In die Ausnehmung 2 ist ein Befestigungsteil 4 einsetzbar,
das im Querschnitt pilzförmig ausgebildet ist. Die kappenartige Abdeckung 4A hat dabei dieselbe Krümmung wie die
Rolle 1 und ist an den Seitenkanten 4B keilförmig abgeschrägt. An beiden Seiten des Befestigungsteils 4 sind unterhalb der kappenartigen Abdeckung 4A am Übergang in den
Fußteil 4C halbrunde Ausnehmungen 5 vorgesehen, in die die
gerundeten Kanten 3 der Rolle 1 einrastbar sind. Der geringste Abstand b (Fig. 2) der beiden halbrunden, seitlichen Ausnehmungen 5 ist dabei in nichteingesetztem Zustand
etwa gleich oder geringfügig kleiner als der Abstand a der
Kanten 3 der Ausnehmung. Hierdurch wird die Leinwand 6 so stark eingeklemmt, daß sie auch bei vollem Ausziehen nicht herausrutschen kann. Das Befestigungsteil 4 kann weiterhin mit einer Längsnut 7 versehen sein, die die Elastizität des Fußteils 4C erhöht, und die Herstellung des Befestigungsteils 4 erleichtert.

Eine Leinwand 6 wird in der in Fig. 2 dargestellten Weise in der Rolle 1 dadurch befestigt, daß das Ende der Leinwand 6A in die Ausnehmung 2 eingeführt wird. Danach wird das Befestigungsteil 4 in Richtung des Pfeils nach unten gedrückt. Hierdurch drücken die keilförmigen Flächen 4D des Fußteils 4C des Befestigungsteils 4 die Kanten 3 der Rolle 1 auseinander, bis diese in die Ausnehmungen 5 einrasten. Die Leinwand 6 ist dann mit ihrem Ende 6A in die in der Zeichnung linke Ausnehmung 5 eingespannt. Die Außenkontur der Rolle 1 hat auch im Bereich des Befestigungsteils 4 den gleichen Radius. Hierdurch werden beim Aufrollen der Leinwand 6 unliebsame und das Bild störende Knicke in der Leinwand 6 vermieden.

Eine weitere, besonders vorteilhafte Ausführungsform der Erfindung ist in den Figuren 3 und 4 dargestellt. Die hier mit 12 bezeichnete Ausnehmung ist in der Weise ausgebildet, daß sie keilförmig zum Innern der Rolle 1 sich erweiternde, symmetrische Seitenkanten 12K und 12B aufweist. Außerdem ist die Ausnehmung 12 zum Innern der Rolle 1 hin durch einen Steg 8 geschlossen. Im dargestellten Ausführungsbeispiel weist das Innere der Rolle 1 vorstehende Rippen 9 auf, die als Verstärkung und Lagerung für Innenteile, beispielsweise für die eine Rückholfeder aufweisende Aufrollvorrichtung, dienen. Wenn die Wandstärke der Rolle 1 entsprechend groß ist, können Steg 8 und Rippen 9 durch diese selbst gebildet werden.

Das bei dieser Ausführungorm mit 14 bezeichnete Befestigungsteil ist an seiner Außenfläche 14E im Querschnitt kreisabschnittförmig ausgebildet, wobei der Radius des entsprechenden Kreisbogens mit dem der Rolle 1 übereinstimmt. Auch die Innenfläche 14C ist im Querschnitt im wesentlichen kreisabschnittförmig. Die Höhe h des Befestigungsteils 14 ist an beiden Kanten gleich. Beide Kanten 14A und 14B sind in der Weise abgeschrägt, daß sich das Befestigungsteil 14 zum Innern der Rolle 1 hin erweitert. Die in der Zeichnung rechte Kante 14B weist die Besonderheit auf, daß sie an der inneren Kante 14D im Querschnitt kreisbogenförmig abgerundet ist und daß diese innere Kante um die Stärke d der Leinwand über die Innenfläche 14C vorsteht. Die gesamte Breite des Befestigungsteils 14 entspricht etwa der Breite der Ausnehmung 12, deren beide Seitenkanten 12A und 12B in der dargestellten Weise nach innen sich erweiternd abgeschrägt sind.

Die Rolle 1 ist in der Regel einstückig hergestellt und besteht vorzugsweise aus Kunststoff. Gemäß einer besonders vorteilhaften Ausbildung ist ihre Außenkontur in der Weise konstruiert, daß sie aus zwei kontinuierlich ineinander übergehenden Hälften mit gleichem Radius R besteht, von denen die in der Zeichnung unter der Linie A-A' liegende Hälfte I um den mit M bezeichneten Mittelpunkt verläuft, während die Außenkontur der oberen Hälfte II im wesentlichen von einem um den Radius M' geschlagenen Halbkreis gebildet wird. Der Mittelpunkt M' ist in Richtung einer Mittelsenkrechten zur Achse AA' um die Dicke d der Leinwand, d.h. also um etwa 0,5 mm, versetzt.

Dieser Aufbau der Rolle 1 zusammen mit der Ausbildung der Ausnehmung 12 und des Befestigungsteils 14 ermöglicht eine besonders einfache Montage und ergibt besonders gute Ergebnisse hinsichtlich der Knickfreiheit der Leinwand 6. Wie der Fig. 3 zu entnehmen ist, wird durch diese Ausbildung erreicht, daß die Außenkontur 14E des Befestigungsteils 14 an der mit der Abrundung 14D versehenen Seite mit der Außenkante der Rolle 1 fluchtet, während sie an der mit der Abschrägung 14B versehenen Seite um die Stärke d der Leinwand über die entsprechende Kante der Rolle 1 vorsteht. Hierdurch wird erreicht, daß die Leinwand 6 beim Aufwickeln der zweiten Lage 6C auf die erste Lage 6B kontinuierlich übergeht und kein Knick entsteht.

Bei dieser Ausführungsform geschieht das Einlegen der Leinwand 6 in der Weise, daß ihr Ende 6A in der in Fg. 4 dargestellten Weise in die Ausnehmung 12 eingelegt wird. Danach wird das Befestigungsteil 14 mit der abgeschrägten Kante 14A eingesetzt und in der durch den Pfeil dargestellten Weise heruntergedrückt, bis die abgerundete Kante 14D hinter die durch die Abschrägung 12B gebildete Nase 1A der Rolle 1 einrastet. Die Leinwand 6 ist damit unverrückbar befestigt.

<u>Patentansprüche</u>

1. Vorrichtung zum Aufwickeln einer Projektionsleinwand auf eine in einem Gehäuse gelagerte rohrförmige Rolle, an der eine Kante der Leinwand befestigt ist, dadurch gekennzeichnet, daß die Rolle (1) eine längs einer Mantellinie verlaufende Ausnehmung (2; 12) aufweist, in die ein der Außenkontur der Rolle (1) angepaßtes Befestigungsteil (4; 14) für die Leinwand (6) verrastbar eingesetzt ist.

2. Vorrichtung nach Anspruch 1, dadurch gekennzeichnet, daß die die Ausnehmung (2) begrenzenden Kanten (3) der Rolle (1) radial nach innen zurückversetzt sind und das Befestigungsteil (4) so ausgebildet ist, daß sein Außenradius mit dem der Rolle (1) übereinstimmt.

3. Vorrichtung nach Anspruch 1, dadurch gekennzeichnet, daß das Befestigungsteil (4) rinnenförmige Ausnehmungen (5) aufweist, in welche die die Ausnehmung (2) begrenzenden Kanten (3) der Rolle (1) verrastbar eingreifen.

4. Vorrichtung nach Anspruch 3, dadurch gekennzeichnet, daß die Kanten (3) abgerundet sind.

5. Vorrichtung nach einem der vorhergehenden Ansprüche, dadurch gekennzeichnet, daß das Befestigungsteil (4) im Querschnitt pilzförmig ausgebildet ist.

6. Vorrichtung nach Anspruch 5, dadurch gekennzeichnet, daß die Seitenkanten des ins Innere der Rolle (1) ragenden Fußteils (4C) des Befestigungsteils (4) keilförmige Abschrägungen (4D) aufweisen.

7. Vorrichtung nach Anspruch 6, dadurch gekennzeichnet, daß das Fußteil (4C) in der Mitte mit einer Längsnut (7) versehen ist.

8. Vorrichtung nach Anspruch 1, dadurch gekennzeichnet, daß die Ausnehmung (12) nutenförmig ausgebildet und in ihrem Querschnitt zum Innern der Rolle (1) hin erweitert ist.

9. Vorrichtung nach Anspruch 8, dadurch gekennzeichnet, daß das in die Ausnehmung (12) eingesetzte Befestigungsteil (14) an der Außenseite im Querschnitt die Form eines Kreisabschnitts mit dem Radius (R) der Rolle (1) aufweist und an beiden Kanten (14A; 14B) nach innen sich erweiternd abgeschrägt ist.

10. Vorrichtung nach Anspruch 9, dadurch gekennzeichnet, daß das Befestigungsteil (14) an der einen inneren Längskante eine kreisbogenförmige Abrundung (14A) aufweist, deren innere Kante (14C) um die Dicke (d) der Leinwand über die Innenkante (14C) des Befestigungsteils (14) vorsteht, wobei die Höhe (h) des Befestigungsteils (14) an dieser Kante gleich der Höhe der anderen Kante (14B) ist.

11. Vorrichtung nach Anspruch 9 oder 10, dadurch gekennzeichnet, daß die Außenkontur der Rolle (1) aus zwei ineinander übergehenden Halbkreishälften mit gleichem

**0080191**

Radius (R) besteht, von denen der Mittelpunkt derjenigen Hälfte (II), in der die Ausnehmung (12) angeordnet ist, um die Dicke (d) der Leinwand senkrecht zur Mitte der Ausnehmung (12) in Richtung der anderen Hälfte (I) versetzt ist.

0080191

1/2

Fig. 2

Fig. 1

Fig. 4

Fig. 3

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | G 03 B  21/58 |
| Y | US-A-2 534 960  (A.V. DITTY)  * Figur 7 * | 1 | B 65 H  75/28  E 06 B   9/172 |
| | --- | | |
| Y | US-A-4 159 162  (E.W. CHRISTOFFEL)  * Figur 7 * | 1,2,8 | |
| | --- | | |
| Y | FR-A-2 365 013  (STE INDUSTRIELLE ET FINANCIERE LE PROFIL)  * Figuren 1, 2 * | 1,2,8, 9 | |
| | --- | | |
| Y | GB-A-1 358 295  (EASTMAN KODAK)  * Figur 2 * | 1,8,9 | |
| | --- | | |
| A | GB-A-1 415 654  (EMI)  * Figur * | | RECHERCHIERTE SACHGEBIETE (Int. Cl. 3) |
| | ----- | | B 65 H  75/00  E 06 B   9/00  G 03 B  21/00 |

Der vorliegende Recherchenbericht wurde für alle Patentansprüche erstellt.

| Recherchenort | Abschlußdatum der Recherche | Prüfer |
|---|---|---|
| BERLIN | 14-01-1983 | HOPPE H |